Europäisches Patentamt

European Patent Office

Office européen des brevets

(19)

(11) Publication number: 0 375 400
A1

(12) EUROPEAN PATENT APPLICATION

(21) Application number: 89313365.2

(51) Int. Cl.5: G06F 15/80

(22) Date of filing: 20.12.89

(30) Priority: 20.12.88 GB 8829624

(43) Date of publication of application:
27.06.90 Bulletin 90/26

(84) Designated Contracting States:
AT BE CH DE ES FR GB GR IT LI LU NL SE

(71) Applicant: AMT(HOLDINGS) LIMITED
65 Suttons Park Avenue
Reading Berkshire RG6 1AZ(GB)

(72) Inventor: Hunt, David John
3 Moores Green
Wokingham Berkshire RG11 1QG(GB)
Inventor: Thorpe, Roger Thomas
24 Avellino
Irvine CA 92714(US)
Inventor: Broughton, Andrew John
23952 Dovekie Cr.
Laguna Niguel CA 92677(US)

(74) Representative: Rackham, Stephen Neil et al
GILL JENNINGS & EVERY 53-64 Chancery
Lane
London WC2A 1HN(GB)

(54) Processor array system.

(57) A processor array comprises a number of processing elements (PE). Eeach processing element (PE) includes nearest neighbour inputs (NN) arranged to receive data from adjacent processing elements (PE) in the array. Each processing element (PE) has a memory output (MO) for communicating data from the processing element (PE) to associated store. Memory pins ($P_1 P_2$) are connected to the memory outputs (MO). The memory pins ($P_1 P_2$) are also connected to the nearest neighbour inputs (NN) of their respective processing elements and also provide a data path to the nearest neighbour inputs (NN) of neighbouring processing elements. The processing elements transfer data to store and shift data to neighbouring processing elements (PE) in separate, non-overlapping operations.

Fig. 5.

# PROCESSOR ARRAY SYSTEM

The present invention relates to processor arrays for use in parallel processing computer systems. An example of such an array is disclosed and claimed in GB-A-1445714.

Typically such a processor array comprises a number of single bit processing elements arranged in rows and columns. Each processing element other than those on the very edge of the array is connected to its four nearest neighbours in the array in the North, South, East and West directions so as to permit transfer of data between them. Each processing element is also connected to data buses associated with its respective row and column. Each processing element includes a local store and has both a memory input and a memory output connected to the local store. In many applications it is desirable to increase the amount of store available to each processing element and to this end each processing element includes a memory pin connected in common with the local store at the memory output of the processing element and arranged to link the processing element to external memory.

According to the present invention, a processor array comprising a number of processing elements, each processing element including nearest neighbour inputs, a memory output for communicating data from the processing element to associated store, and memory pins connected to the memory outputs of at least some of the processing elements, is characterised in that the memory pins are also connected to at least one of the nearest neighbour inputs of the respective processing elements and are arranged to communicate data to at least one of the nearest neighbour inputs of a processing element neighbouring the respective processing element and in that the processing elements are arranged both to transfer data to their respective stores and to shift data to neighbouring processing elements by outputting data via their respective memory outputs in separate non-overlapping operations.

With known processor arrays it has been necessary to provide separate dedicated outputs in each processing element for writing data to memory and for shifting data to neighbouring processing elements. The present inventor has found however that by constraining the operation of the array so that it is never necessary to access memory and to perform a neighbour shift within a single instruction it is possible to arrange the processing element so that a single output is used for both functions, thereby considerably simplifying the construction of the array. It is found that far from limiting the performance of the array the constraint on the timing of memory access and neighbour shift operations confers significant advantages. Both the memory access and the neighbour shift are time-consuming operations. By ensuring that they never both occur in a single instruction the maximum possible execution time for an instruction is considerably reduced and so the length of the basic clock cycle used for all instructions can be correspondingly shortened.

Preferably the array comprises a number of sub-arrays and the memory pins of the processing elements along the edges of the sub-arrays are connected to the nearest neighbour inputs of the processing elements along the opposing respective edges of neighbouring arrays to provide a data path for the shifting of data from one sub-array to an adjacent sub-array. Preferably the memory pins are connected at one end to the memory output and to the at least one of the nearest neighbour inputs of the respective processing element, and at the other end to the memory pin of the neighbouring processing element.

Away from the edges of each sub-array the data paths for the communication of data from the memory output of one processing element to the neighbour inputs of adjacent elements are provided by the internal wiring of the chip on which the sub-array is formed. For it to be possible to shift data across the whole extent of the array however external connections are needed to join the processor elements on the edge of one sub-array to those on the opposing edge of an adjacent sub-array. As noted above each processing element is already provided with at least one external connection in the form of its memory pin The memory pin is a bidirectional pin provided to allow the connection of external memory to the processing element. Since in the present invention the data shift and memory access functions are entirely separate it is possible to use the memory pins of the processor elements at the edges of the array to provide the necessary connections between sub-arrays. When, for example, each sub-array contains 8 x 8 processing elements the 8 bidirectional memory pins associated with the top (northern) row of processing elements can be used to output data to the processing element chip logically to the North (for a shift to the North) or to input data from that chip (for a shift to the South). Similarly the 8 memory pins associated with the bottom (southern) row of processing elements can be used to send data to or receive data from the processing element chip logically to the South. The memory pins at the edge of the array are also used for shifts to the East or to the West in an analogous fashion.

Preferably the sub-arrays are square and one of the two pairs of diagonally opposite corners of each sub-array includes additional memory pins, one pin being formed adjacent each of the two corners and arranged to connect the processing element in its respective corner to the processing element in the opposing corner of the adjacent sub-array.

A system in accordance with the present invention is now described in detail with reference to the accompanying drawings in which

Figure 1 is a diagram showing the connections between sub-arrays;

Figure 2 is a diagram showing the interconnection of the sub-arrays in an alternative embodiment;

Figure 3 is a diagram showing data-flow within a processing element;

Figure 4 is a schematic showing one of the processing elements; and

Figure 5 is a diagram showing the connections between two processing elements on the edges of adjacent sub-arrays.

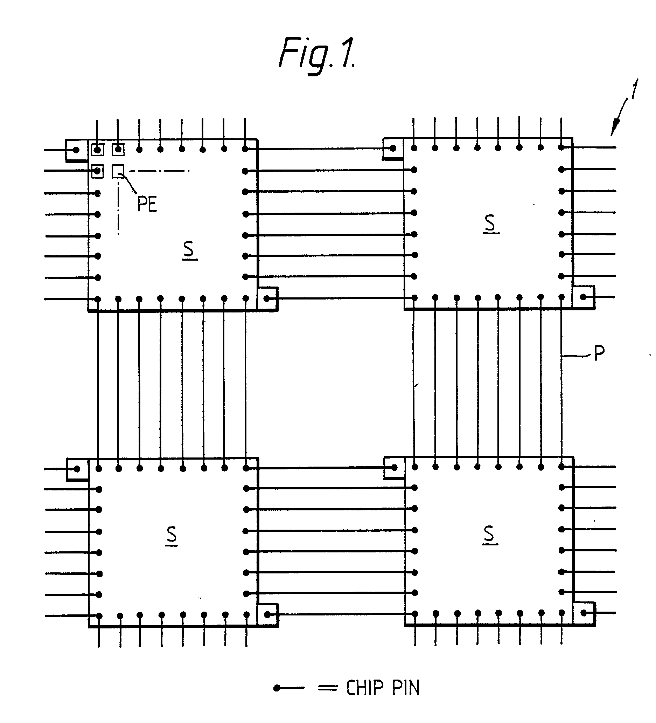

A processor array 1 includes a number of sub-arrays S. In the preferred example each sub-array S includes 64 processor elements arranged 8 x 8 and the array as a whole includes 64 such sub-arrays arranged 8 x 8 to give an overall array size of 64 x 64. For clarity, only four of the sub-arrays are shown in Figure 1.

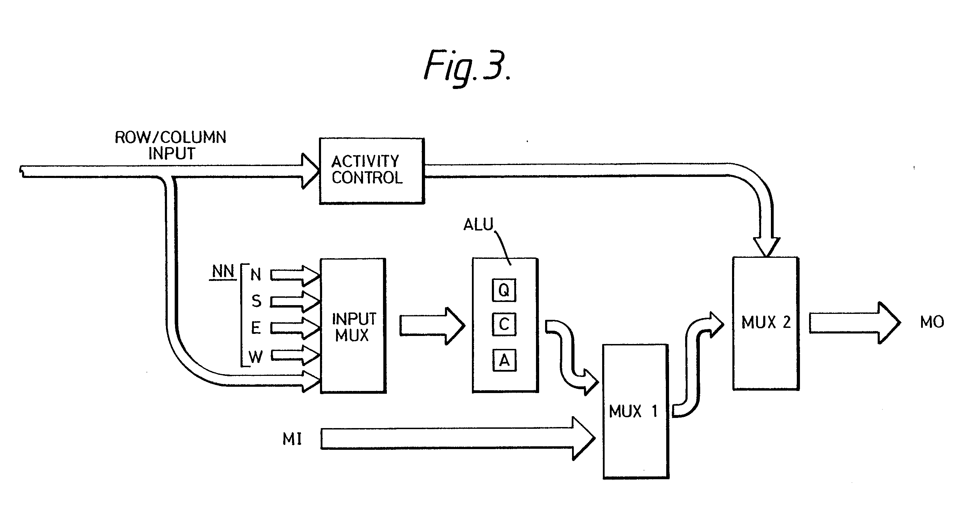

As shown in Figure 3 each processing element includes four nearest neighbour inputs NN which are received at an input multiplexer and a memory input MI which receives data from a local store. The processing element PE includes an arithmetic unit ALU which receives at its input signals from the memory input MI and the input multiplexer MUX. The arithmetic unit ALU includes an AND circuit and associated sum and carry registers Q and C respectively. The arithmetic unit ALU also includes an activity control register A. The use of the activity control register and other features of the processing element are described in greater detail in our co-pending European application, agent's reference 80/3119/02, also entitled 'Processor Array' and having the same filing date as the present application.

The output of the arithmetic unit ALU is sent to the memory output MO of the processing element PE. This output MO is connected in common to the local store of the respective processing element PE, to data paths linking the memory output MO to the nearest neighbour inputs of the processing elements in the N,S,E and W directions, and to a bidirectional memory pin P. As described in further detail below, in the case of those processing elements PE formed on the very edge of a sub-array the memory pin P is used to provide one of the data paths for connection to a nearest neighbour input of processing element PE in an adjacent sub-array.

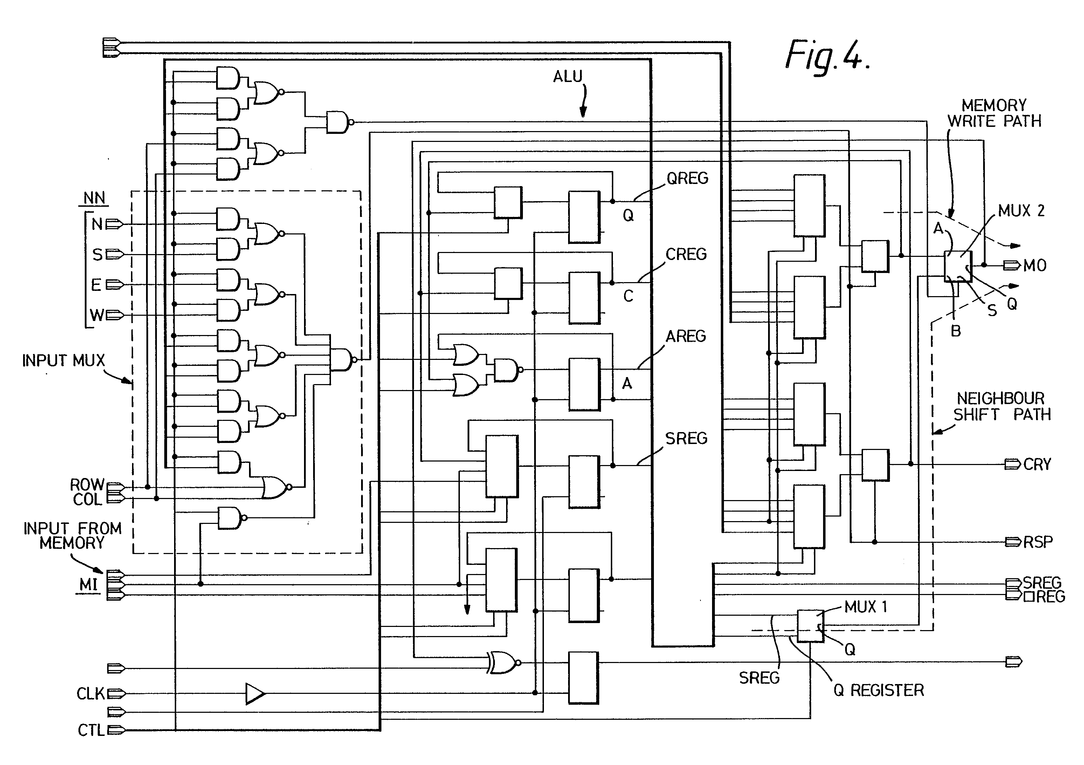

As described and claimed in our earlier patents GB-B-2019620 and GB-B-2019621, the arithmetic unit ALU is arranged so that in one mode of operation it acts as a connector, coupling its inputs directly to the memory output MO. This arrangement uses the property of the adder circuit that when two of its inputs are equal the carry output is equal to these two inputs while the sum output is equal to the other input. In the arrangement described in the above cited patents the data output is taken from the carry output of the adder. The preferred example of the present invention differs in that the data output is taken from the sum register Q. As shown in Figure 4 the output from Q is connected to the memory output MO via output multiplexers MUX1, MUX2. Thus using this alternative mode of the processing element it is possible to shift data across the array from neighbour to neighbour, data passing from a neighbour input via the arithmetic unit ALU to the memory output of the particular processing element and thence to the nearest neighbour input of the adjacent processing element in the direction of the data shift.

The multiplexers MUX1, MUX2 provide the following options for the memory output MO:

1. Top multiplexer MUX2 selects its top input. This gives an unconditional write of the processing element output to memory.

2. Top multiplexer MUX2 selects its top input and the processing element output is a carry function. In this case the memory output MO is used as a neighbour output path allowing asynchronous propagation of carries along a line of processing elements.

3. Bottom multiplexer MUX1 selects its top input, i.e. SREG the old memory contents, and top multiplexer MUX2 selects the output from the bottom multiplexer MUX1 if the value of the "activity" register is false or the processing element output if the value of the activity register is true. This provides an activity controlled write to memory.

4. Top multiplexer MUX2 selects its bottom input as does the bottom multiplexer MUX1. In this case the Q register is output onto MO and then goes to neighbouring processing elements. This is the neighbour shift function.

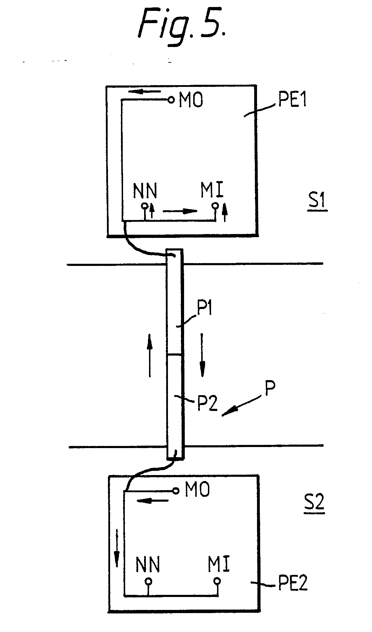

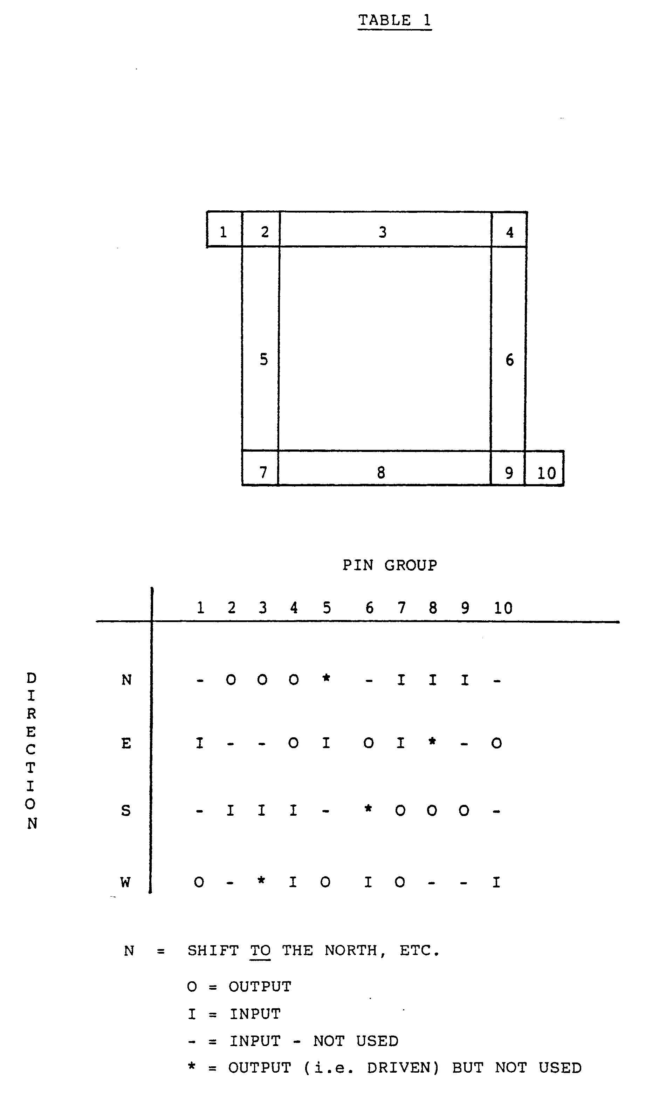

Away from the edges of each sub-array the data paths for nearest neighbour connections are formed entirely internally within the chip. However each sub-array is formed on a separate chip and so at the edges of the sub-array an external connection is necessary for it to be possible to shift data continuously from one sub-array to another. As already noted each processing element PE is formed with at least one external connection in the form of a bidirectional memory pin P which is connected to its memory input MI and memory output MO and provided primarily to allow the use of additional external memory in addition to the local store within the processing element PE. In practice however it is not always required to connect external memory to the processing elements and so the memory pin P is left unused. The memory pins of the processing elements at the edge of the sub-arrays are therefore used to provide the connections from the memory outputs to the nearest neighbour inputs of the processing elements on the corresponding edge of an adjacent sub-array. As shown in Figure 5 the memory pins P1,P2 of processing elements PE1 and PE2 at the edges of adjacent sub-arrays S1 and S2 are joined together to form a single bidirectional connection between the two sub-arrays S1, S2. Each of the pins P1, P2 is connected to the memory output MO, memory input MI and at least one of the nearest neighbour inputs NN of its respective processing element PE. Then, for example, in a northward data shift data passes from the memory output MO of the processing element PE2 via the pin P to the sub-array S1 which is immediately to the North of the sub-array S2. Similarly when data is shifted southward it passes from the memory output MO of PE1 via the pin P to the nearest neighbour input NN of PE2. The pin P may also be used for connecting the processing elements PE to external store in which case, as described below a buffer is inserted between the individual pins P1, P2.

It is found that when the wiring of a complete array is considered there are conflicts between the requirements of the processing elements at the logical corners of the sub-arrays. The preferred example of the present invention therefore provides two extra pins associated with the North West and South East corners of each sub-array respectively. Equally it is possible to realise the same effect by providing the extra pins at the North East and South West corners. Table 1 shows which pins are driven for each direction of shift. The pins P are grouped together and labelled together with the usage of each group of pins for each direction of shifts. When a North or South shift is being performed, the pins used only for East or West shifting (groups 5 and 6) are not used, however the chip is arranged so that in each case some pin drives these outputs in addition to avoid the pins "floating" to an undefined logic level. When the sub-arrays are interconnected as shown in Figure 1 then for each direction of shift each net (i.e. set of interconnected pins) is driven by exactly one pin, and at most one pin is using the net as an input.

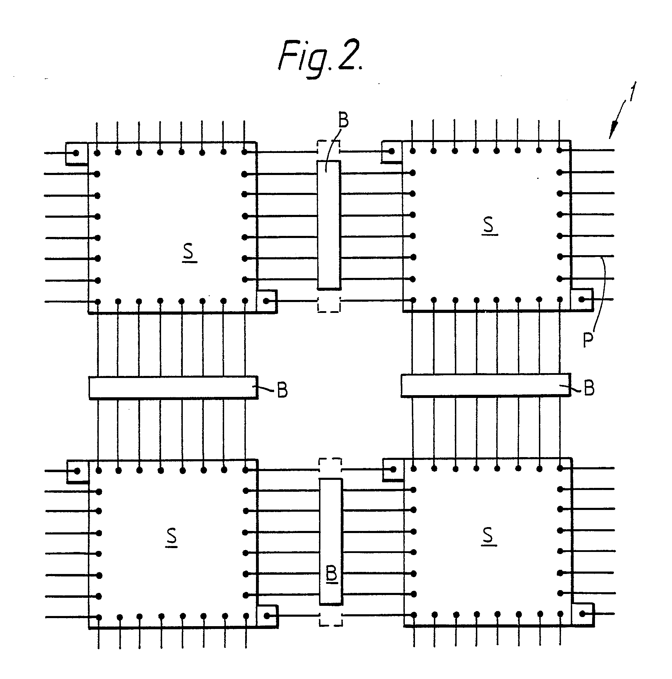

Figure 1 shows an arrangement suitable for use when it is not required to connect external memory to the chips. The chip is arranged so that its instruction set includes no single instruction involving both memory access and data shifting. It is therefore still possible to use the chips with external memory since the pins will never be required to carry both nearest neighbour data and memory data at one and the same time. The interconnection scheme of Figure 1 however is such that the memory signals of different processing elements PE are connected in common. To avoid this when the array is to be used with external memory bidirectional tri-state bus drivers B are connected between the arrays as shown in Figure 2. These drivers B, which may themselves be entirely conventional in construction, are enabled in one or other of the directions according to the direction of shift. During memory accesses all the bus drivers B are disabled and the memory pins P are driven by the PE chip (for memory writes) or by the memory chip (for memory reads). For ease of construction bus drivers are also provided for the additional pins at the corners of the arrays although these are not strictly necessary for the functioning of the array. In practice the array is physically partitioned across several different printed circuit boards and the insertion of extra buffers between the boards serve the additional purpose of improving the electrical properties of the system.

Although the embodiment described above relates to a general purpose chip capable of use with or without external memory the present invention can equally be used with a specially packaged chip dedicated to applications where no external memory is needed. In this case no connection is made for the memory pads of the 36 PE's (i.e. 6 x 6) logically in the centre of the chip thus permitting a smaller package to be used.

## Claims

1. A processor array comprising a number of processing elements (PE), each processing element (PE) including nearest neighbour inputs (NN) a memory output (MO) for communicating data from the processing element (PE) to associated store, and memory pins (P1,P2) connected to the memory outputs of at least some of the processing elements (PE), characterised in that the memory pins are also connected to at least one of the nearest neighbour inputs (NN) of the respective processing elements (PE) and are arranged to communicate data to at least one of the nearest neighbour inputs (NN) of a processing element (PE) neighbouring the respective processing element (PE) and in that the processing elements (PE) are arranged both to transfer data to their respective stores and to shift data to neighbouring processing elements (PE) by outputting data via their respective memory outputs (MO) in separate non-overlapping operations.

2. An array according to claim 1, in which the memory pins (P1,P2) are connected at one end to the memory output (MO) and to at least one of the nearest neighbour inputs (NN) of the respective processing element (PE) and at the other end to the memory pin (P1,P2) of the neighbouring processing element (PE).

3. An array according to claim 1 or 2, in which the array comprises a number of sub-arrays (S) and the memory pins (P1,P2) of the processing elements along the edges of the sub-arrays (S) are connected to the nearest neighbour inputs (NN) of the processing elements along the opposing respective edges of neighbouring sub-arrays (S) to provide a data path for the shifting of data from one sub-array (S) to an adjacent sub-array (S).

4. An array according to claim 3, in which the sub-arrays (S) are square and one of the two pairs of diagonally opposite corners of each sub-array includes additional memory pins (P), one pin (P) being formed adjacent each of the two corners and arranged to connect the processing element (PE) in its respective corner to the processing element (PE) in the opposing corner of the adjacent sub-array (S).

5. An array according to claim 3 or 4, including a buffer connected between the memory pins (P) of adjacent sub-arrays (S) and arranged to connect external memory to the processing elements (PE) on the respective edges of the sub-arrays (S).

# Fig.1.

• — = CHIP PIN

# Fig.2.

# Fig.3.

EP 0 375 400 A1

Fig. 4.

Fig. 5.

TABLE 1

| 1 | 2 | 3 | 4 |
|---|---|---|---|
|   | 5 |   | 6 |
|   | 7 | 8 | 9 | 10 |

PIN GROUP

|   |   | 1 | 2 | 3 | 4 | 5 | 6 | 7 | 8 | 9 | 10 |
|---|---|---|---|---|---|---|---|---|---|---|----|
| D I R E C T I O N | N | - | O | O | O | * | - | I | I | I | - |
|  | E | I | - | - | O | I | O | I | * | - | O |
|  | S | - | I | I | I | - | * | O | O | O | - |
|  | W | O | - | * | I | O | I | O | - | - | I |

N = SHIFT TO THE NORTH, ETC.

O = OUTPUT

I = INPUT

- = INPUT - NOT USED

* = OUTPUT (i.e. DRIVEN) BUT NOT USED

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | GB-A-1 445 714 (ICL)<br>* Page 9, lines 20-32; figure 5: (OUTPUT MX180; line 161) *<br>--- | 1 | G 06 F 15/80 |
| X | GB-A-1 536 933 (ICL)<br>* Page 3, lines 19-86; page 4, lines 53-61; figure 2 (MX-15; lines 19,21) *<br>--- | 1 | |
| A | US-A-4 149 242 (BELL TELEPHONE)<br>* Column 7, lines 43-54; figure 3 *<br>----- | 1 | |

TECHNICAL FIELDS SEARCHED (Int. Cl.5)

G 06 F 15/80

The present search report has been drawn up for all claims

| Place of search | Date of completion of the search | Examiner |
|---|---|---|
| THE HAGUE | 08-02-1990 | DHEERE R.F.B.M. |